# EUROPÄISCHE PATENTSCHRIFT

(11) **EP 2 813 999 B1**
(45) Veröffentlichungstag und Bekanntmachung des Hinweises auf die Patenterteilung: **01.01.2020**
(21) Anmeldenummer: 14170350.4
(22) Anmeldetag: 28.05.2014
(51) Int. Cl.: G06T 11/00, G06T 11/60

(54) **Augmented-Reality-System und Verfahren zum Erzeugen und Anzeigen von Augmented-Reality-Objektdarstellungen für ein Fahrzeug**
Augmented reality system and method of generating and displaying augmented reality object representations for a vehicle
Système à réalité augmentée et procédé de production et d'affichage de représentations d'objet à réalité augmentée pour un véhicule

(30) Priorität: 10.06.2013 DE 102013210789
(43) Veröffentlichungstag der Anmeldung: 17.12.2014
(73) Patentinhaber: ROBERT BOSCH GMBH, 70442 Stuttgart (DE)
(72) Erfinder: Niem, Wolfgang, 31141 Hildesheim (DE); Abraham, Steffen, 31134 Hildesheim (DE); Simon, Stephan, 31079 Sibbesse (DE); de Boer, Gerrit, 31137 Hildesheim (DE); Wingbermuehle, Jochen, 30559 Hannover (DE)

(56) Entgegenhaltungen:
- WO-A2-2006/124164

## Beschreibung

Die vorliegende Erfindung betrifft ein Augmented-Reality-System und ein Verfahren zum Erzeugen und Anzeigen von Augmented-Reality-Objektdarstellungen für ein Fahrzeug

### Stand der Technik

Augmented-Reality-Systeme werden in Fahrzeugen beispielsweise zur Darstellung von Navigationshilfen eingesetzt, wobei Pfeile, Linien etc. über einem aktuellen realen Bild in Fahrzeugvorwärtsrichtung eingeblendet werden können.

In der WO 2012/108721 A2 ist eine Augmented-Reality-Vorrichtung und ein entsprechendes Verfahren beschrieben, welches in einem von einem Fahrzeug aus in Fahrzeugsvorwärtsrichtung aufgenommenen Bild Informationsobjekte einfügt.

In der WO 2006/124164 A2 sind ein Verfahren und eine Vorrichtung zum visuellen Erweitern einer wahrgenommenen Realität beschrieben. Dazu projiziert eine Projektionseinrichtung Erweiterungsinformationen über eine von einem Betrachter betrachtete Realweltszenerie.

Aus der US 2003/0059088 A1 sind ein Verfahren und eine Vorrichtung zur Aufnahme und Analyse von Bilddaten in einem Fahrzeug bekannt, worin vom Benutzer bestimmte Suchkriterien vorgegeben werden. Wenn die aufgenommenen Bilddaten die Kriterien erfüllen, wird der Benutzer entsprechend informiert.

### Offenbarung der Erfindung

Die vorliegende Erfindung offenbart ein Augmented-Reality-System mit den Merkmalen des Patentanspruchs 1 und ein Verfahren mit den Merkmalen des Patentanspruchs 12.

Demgemäß ist vorgesehen ein Augmented-Reality-System zum Erzeugen und Anzeigen von Augmented-Reality-Objektdarstellungen für ein Fahrzeug mit einer Bildsensoreinrichtung, welche dazu ausgebildet ist, Bilddaten aus der Umgebung des Fahrzeugs aufzunehmen; einer Datenspeichereinrichtung mit einem ersten Speicher und einem zweiten Speicher, welche mit der Bildsensoreinrichtung verbunden ist und welche derart ausgebildet ist, dass die aufgenommenen Bilddaten durch den ersten Speicher und den zweiten Speicher speicherbar sind; einer Identifizierungseinrichtung, welche mit der Bildsensoreinrichtung und mit der Datenspeichereinrichtung verbunden und derart ausgebildet ist, dass sie in den aufgenommenen Bilddaten vorhandene Objekte nach einem vorgegebenen ersten Auswahlkriterium identifizieren kann und weiterhin derart ausgebildet ist, dass mittels der Identifizierungseinrichtung nach einem vorgegebenen zweiten Auswahlkriterium, welches Vorgaben an die Bildauflösung der Bilddaten umfasst, bestimmte Bilddaten zu den identifizierten vorhandenen Objekten zum Speichern an den zweiten Speicher übergebbar sind; einer Augmented-Reality-Einrichtung, welche mit der Datenspeichereinrichtung verbunden und derart ausgebildet ist, dass sie durch Kombination der aufgenommenen Bilddaten mit zusätzlichen bereitstellbaren Daten Augmented-Reality-Objektdarstellungen erzeugen kann; und einer Auswahleinrichtung, welche mit der Augmented-Reality-Einrichtung verbunden und derart ausgebildet ist, dass durch sie die Augmented-Reality-Einrichtung steuerbar ist, basierend auf einem von der Auswahleinrichtung nach einem vorgegebenen dritten Auswahlkriterium ausgewählten Teil der in dem zweiten Speicher gespeicherten Bilddaten, Augmented-Reality-Objektdarstellungen zur Anzeige mittels einer mit der Augmented-Reality-Einrichtung verbundenen Anzeigeeinrichtung zu erzeugen.

Das erste Auswahlkriterium kann beispielsweise derart festgelegt sein, dass die Identifizierungseinrichtungen unter anderem Tankstellen identifiziert. Während der Fahrt werden entsprechend Tankstellen, welche in den Aufnahmebereich der Bildsensoreinrichtung eintreten, als vorhandene Objekte identifiziert. Gemäß dem zweiten Auswahlkriterium, welches beispielsweise eine minimale Bildauflösung angibt, können dann Bilddaten zu den identifizierten Tankstellen im zweiten Speicher gespeichert werden. Ein Benutzer kann dann beispielsweise Augmented-Reality-Objektdarstellungen, welche auf den zehn Tankstellen basieren, welche zuletzt identifiziert wurden, mittels der Anzeigeeinrichtung nacheinander oder gleichzeitig anzeigen lassen. Als ein Unterkriterium des dritten Auswahlkriterium kann, beispielsweise über eine Benutzerschnittstelle, ein Benutzer festlegen, dass die Augmented-Reality-Objekte Bilddaten umfassen sollen, welche die Tankstellen beispielsweise in Frontalansicht zeigen. So kann der Benutzer beispielsweise entscheiden, ob eine bestimmte Tankstelle einen Service aufweist, den erwünscht, etwa einen angeschlossenen Supermarkt. Das dritte Auswahlkriterium kann weiterhin das Unterkriterium aufweisen, dass die Augmented-Reality-Objekte zusätzlich Informationen über die Benzinpreise an den Tankstellen umfassen sollen.

Das Verfahren zum Erzeugen und Anzeigen von Augmented-Reality-Objektdarstellungen weist die Schritte auf:
Identifizieren von vorhandenen Objekten in den aufgenommenen Bilddaten nach einem vorgegebenen ersten Auswahlkriterium; Bestimmen von in dem ersten Speicher gespeicherten Bilddaten zu den identifizierten vorhandenen Objekten nach einem zweiten Auswahlkriterium, welches Vorgaben an die Bildauflösung der Bilddaten umfasst; Speichern der bestimmten Bilddaten umfasst, bestimmte Bilddaten zu den identifizierten vorhandenen Objekten in einem zweiten Speicher; Auswählen eines Teils der im zweiten Speicher gespeicherten Bilddaten nach einem vorgegebenen dritten Auswahlkriterium; Erzeugen von Augmented-Reality-Objektdarstellungen basierend auf dem ausgewählten Teil der Bilddaten; Anzeigen der erzeugten Augmented-Reality-Objektdarstellungen mittels einer Anzeigeeinrichtung.

### Vorteile der Erfindung

Erfindungsgemäß kann ein Benutzer in einem Fahrzeug eine Vielzahl von vorhandenen identifizierten Objekten auch dann noch mit unmittelbarem Bezug zur realen Szene betrachten, wenn sie aufgrund der Bewegung des Fahrzeugs bereits das Sichtfeld des Benutzers verlassen haben. Zudem kann er nicht nur zusätzliche Informationen zu den identifizierten Objekten erhalten, sondern diese auch in verschiedenen Ansichten mit der jeweils besten Bildauflösung betrachten.

Gemäß einer bevorzugten Weiterbildung ist der zweite Speicher so ausgebildet, dass er von der Identifizierungseinrichtung an den zweiten Speicher übergebene Bilddaten speichert, solange Speicherplatz im zweiten Speicher verfügbar ist. Es werden also nur solche Bilddaten langfristig gespeichert, welche für den Benutzer auch interessant oder relevant sind. Der zweite Speicher kann auch beim Abstellen des Motors geleert werden. Der zweite Speicher kann auch derart ausgebildet sein, dass er Bilddaten zu einer vorbestimmten Anzahl von zuletzt identifizierten vorhandenen Objekten speichert, beispielsweise zu den letzten zehn identifizierten vorhandenen Objekten. So kann der zweite Speicher mit vergleichsweise geringem Speichervolumen ausgebildet sein, aber gleichzeitig eine große Menge von Bilddaten zu den einzelnen identifizierten Objekten bereithalten. Es kann dem Benutzer auch möglich sein, beispielsweise durch Bedienen einer Benutzerschnittstelle, ihn interessierende Bilddaten zu identifizierten vorhandenen Objekten von der automatischen Löschung auszunehmen.

Gemäß einer weiteren bevorzugten Weiterbildung ist der erste Speicher derart ausgebildet, dass er die aufgenommenen Bilddaten nur speichert, bis die in den aufgenommenen Bilddaten jeweils vorhandenen Objekte durch die Identifizierungseinrichtung identifiziert und die zu speichernden Bilddaten zu den identifizierten vorhandenen Objekten in dem zweiten Speicher gespeichert sind. Somit kann bei vergleichsweise geringem Speichervolumen des ersten Speichers eine große Menge von Bilddaten rund um das Fahrzeug aufgenommen werden. Der erste Speicher kann aber auch so ausgebildet sein, dass er die aufgenommenen Bilddaten speichert, solange Speicherplatz im ersten Speicher verfügbar ist, oder für einen vorbestimmten Zeitraum, wie etwa eine Stunde. Die Identifizierung der vorhandenen Objekte nach dem ersten Auswahlkriterium kann somit auch geraume Zeit nach der Aufnahme erfolgen. Ein Benutzer kann sich also auch Augmented-Reality-Objektdarstellungen zu ihn interessierenden Objekten anzeigen lassen, welche aufgenommen wurden, ehe er angegeben hat, dass ihn die entsprechenden Objekte interessieren.

Gemäß einer weiteren bevorzugten Weiterbildung können das erste, das zweite und das dritte Auswahlkriterium jeweils vorprogrammiert sein und/oder von einem Benutzer über eine Benutzerschnittstelle eingegeben werden und/oder über eine Kommunikationseinrichtung empfangen werden können. Bei einem Einsatz in einem Polizei- oder Rettungsfahrzeug etwa können über eine Kommunikationseinrichtung erste, zweite und dritte Auswahlkriterien von einer Einsatzzentrale bestimmt werden. Beispielsweise können im Nachhinein auf aufgenommenen Bilddaten Verdächtige gemäß dem ersten Auswahlkriterium identifiziert werden. Gemäß dem zweiten Auswahlkriterium können jeweils Ansichten von Gesichtern von vorne und von der Seite in den jeweils besten vorhandenen Bildauflösungen an den zweiten Speicher übergeben werden. Ein Benutzer im Fahrzeug kann sich entsprechende Augmented-Reality-Objektdarstellungen, welche auf Bilddaten zu den Verdächtigen und/oder zu deren Gesichtern basieren, im Fahrzeug anzeigen lassen. Die Augmented-Reality-Einrichtung kann auch aufgrund der vorhandenen Bilddaten eine Extrapolation nicht genau aufgenommener Gesichtszüge durchführen und diese den realen Bilddaten überlagern.

Gemäß einer weiteren bevorzugten Weiterbildung ist die Identifizierungseinrichtung derart ausgebildet ist, dass die Identifizierung der vorhandenen Objekte auf fahrzeuginternen Kartendaten, Videogeländemerkmalen, lokalen Geländemerkmalen, lokalen Sehenswürdigkeiten und/oder Positions- und Navigationsdaten basieren kann. Beispielsweise kann als ein Unterkriterium des ersten Auswahlkriteriums festgelegt sein, dass Supermärkte identifiziert werden sollen. In einer Datenbank mit georeferenzierten Objekten können Informationen über die Lage von Supermärkten bereitgestellt sein. Die Lokalisierung des Fahrzeugs kann durch verschiedene Ortungsverfahren erfolgen, beispielsweise GPS-Ortung, Ortung mittels Inertialsensorik und/oder Odometern oder eine auf Video-Landmarken basierte Ortung. Die Identifizierungseinrichtung kann somit, basierend auf diesen Informationen, in den aufgenommenen Bilddaten auch optisch nur schwer erkennbare Supermärkte identifizieren. Es kann auch eine Information über eine gegenwärtige Position des Fahrzeugs verwendet werden. Eine Datenbank von Sehenswürdigkeiten kann verwendet werden, um Sehenswürdigkeiten zu identifizieren und/oder Himmelsrichtungen anzugeben, in welchen bestimmte Sehenswürdigkeiten zu sehen sein können. Segmentierte Bildinhalte können, beispielsweise über eine Kommunikationseinrichtung, auch wieder zurück in eine Datenbank mit Georeferenz fließen.

Gemäß einer weiteren bevorzugten Weiterbildung umfassen die zusätzlichen bereitstellbaren Daten Bilddaten und/oder Textdaten und/oder Audiodaten, welche aus einer internen Datenbank und/oder aus mittels einer Kommunikationseinrichtung empfangenen Daten aus einer fahrzeugexternen Datenbank entnommen werden können. Bei fahrzeugexternen Datenbanken kann es sich beispielsweise um Online-Nachschlagewerke, Online-Bildersammlungen etc. handeln. Interne Datenbanken können interne elektronische Landkarten umfassen. Es können aber auch weitere Fahrzeugsensoren verwendet werden, die zusätzlichen bereitstellbaren Daten zu erzeugen, beispielsweise Thermometer.

Gemäß einer weiteren bevorzugten Weiterbildung weist die Bildsensoreinrichtung eine Rundum-Kamera auf, welche derart ausgebildet ist, dass sie Bilddaten gemäß einer im Wesentlichen 180°-Sicht, zentriert um die Fahrtrichtung des Fahrzeugs, sowie Bilddaten gemäß einer im Wesentlichen 180°-Sicht, zentriert um die der Fahrtrichtung entgegengesetzt liegende Richtung, der Umgebung des Fahrzeugs, aufnehmen kann. Die Rundum-Kamera kann aber auch so ausgebildet sein, dass sie Bilddaten gemäß einer 360°-Sicht ohne Zentrierung aufnimmt. Die Rundum-Kamera kann als einzelne Kamera ausgebildet sein, welche beispielsweise rotiert wird. Die Rundum-Kamera kann aber auch als Anordnung einer Mehrzahl von Einzelkameras ausgebildet sein, deren aufgenommene Bilddaten rechnerisch zusammengeschnitten werden.

Gemäß einer weiteren bevorzugten Weiterbildung ist die Anzeigeeinrichtung derart ausgebildet, dass sie im Wesentlichen ohne Zeitverzögerung zumindest Teile der mittels der Bildsensoreinrichtung aufgenommenen Bilddaten kontinuierlich darstellen kann. Interessiert ihn etwa eines der identifizierten Objekte näher, kann er erfindungsgemäß das dritte Auswahlkriterium anpassen und sich das interessierende Objekt anhand der gespeicherten Bilddaten im Rahmen einer Augmented-Reality-Objektdarstellung genauer ansehen.

Gemäß einer weiteren bevorzugten Weiterbildung weist die Anzeigeeinrichtung mindestens einen Hauptanzeigebereich auf, welcher eine im Wesentlichen 180°-Sicht, zentriert um die Fahrtrichtung des Fahrzeugs und/oder zentriert um die der Fahrtrichtung entgegengesetzt liegende Richtung, der Umgebung des Fahrzeugs anzeigt. Ein Benutzer kann somit komfortabel den gesamten Bereich um das Fahrzeug herum beobachten. Auf dem Hauptanzeigebereich können Augmented-Reality-Objektdarstellungen angezeigt werden, wie beispielsweise farbige Umrandung um identifizierte vorhandene Objekte. Es können auch Firmenlogos z.B. eines Geschäfts angezeigt werden, falls etwa ein identifiziertes vorhandenes Objekt ein Geschäft mit einem bekannten Firmenlogo ist.

Gemäß einer weiteren bevorzugten Weiterbildung weist die Anzeigeeinrichtung mindestens einen Nebenanzeigebereich auf, welcher sich ganz oder teilweise innerhalb eines Hauptanzeigebereichs befinden kann, und welcher durch Kombination des ausgewählten Teils der in dem zweiten Speicher gespeicherten Bilddaten mit den zusätzlich bereitstellbaren Daten erzeugte Augmented-Reality-Objektdarstellungen anzeigt. Beispielsweise kann der Nutzer aufgrund der gespeicherten Bilddaten in dem Nebenanzeigebereich ein Gebäude, welches das Fahrzeug bereits passiert hat, mit zusätzlichen Informationen und aus verschiedenen Blickwinkeln mit der jeweils besten vorhandenen Auflösung betrachten. Auf dem Hauptanzeigebereich kann gleichzeitig eine Live-Aufnahme der Umgebung angezeigt werden.

Gemäß einer weiteren bevorzugten Weiterbildung kann ein Benutzer durch Bedienen einer Benutzerschnittstelle eine Vergrößerungsstufe einer Augmented-Reality-Objektdarstellung auswählen, welche mittels der Anzeigeeinrichtung angezeigt wird. So kann ein interessierendes Objekt genauer studiert werden.

Gemäß einer weiteren bevorzugten Weiterbildung kann ein Benutzer durch Bedienen einer Benutzerschnittstelle eine Augmented-Reality-Objektdarstellung mittels der Anzeigeeinrichtung aus einer Mehrzahl von Richtungen anzeigen lassen. Wird beispielsweise ein Eckhaus, welches ein interessierendes identifiziertes vorhandenes Objekt darstellt, von dem Fahrzeug umfahren, können Bilddaten, welche Ansichten des Eckhauses aus einer Mehrzahl von Richtungen entsprechen, aufgenommen und gespeichert werden. Ein Benutzer kann aus den gespeicherten Bilddaten einzelne Bilder zur Anzeige auswählen, beispielsweise solche, bei welchen sich die Ansichtsrichtung jeweils um Vielfache von 30° unterscheidet. Der Benutzer kann aber auch einen Videoclip anzeigen lassen, welcher bei dem Umfahren des Eckhauses aufgenommen wurde, oder welcher aus aufgenommenen einzelnen Bildern der Bilddaten konstruiert wurde.

### Kurze Beschreibung der Zeichnungen

Die vorliegende Erfindung wird nachfolgend anhand der in den schematischen Figuren der Zeichnungen angegebenen Ausführungsbeispiele näher erläutert. Es zeigen dabei:
- Fig. 1: eine schematische Ansicht eines Augmented-Reality-Systems zum Erzeugen von Augmented-Reality-Objektdarstellungen für ein Fahrzeug gemäß einer ersten Ausführungsform der vorliegenden Erfindung;
- Fig. 2: eine schematische Ansicht eines Augmented-Reality-Systems zum Erzeugen von Augmented-Reality-Objektdarstellungen für ein Fahrzeug gemäß einer zweiten Ausführungsform der vorliegenden Erfindung;
- Fig. 3: eine schematische Ansicht einer Anzeigeeinrichtung gemäß der zweiten Ausführungsform der vorliegenden Erfindung;
- Fig. 4: eine schematische Ansicht einer Anzeigeeinrichtung gemäß einer dritten Ausführungsform der vorliegenden Erfindung;
- Fig. 5: ein Flussdiagramm zur Veranschaulichung eines Verfahrens gemäß der vorliegenden Erfindung.

In allen Figuren sind gleiche bzw. funktionsgleiche Elemente und Vorrichtungen - sofern nichts anderes angegeben ist - mit denselben Bezugszeichen versehen worden. Obgleich manche Verfahrensschritte mit Bezugszeichen versehen sind, welche Zahlen aufweisen, ist dadurch keine Reihenfolge festgelegt. Insbesondere können auch mehrere Verfahrensschritte gleichzeitig erfolgen.

### Ausführungsformen der Erfindung

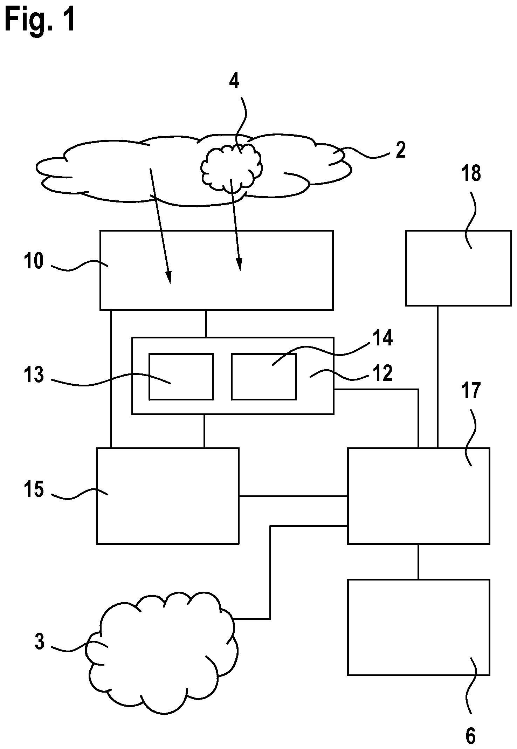

Fig. 1 zeigt eine schematische Ansicht eines Augmented-Reality-Systems zum Erzeugen von Augmented-Reality-Objektdarstellungen für ein Fahrzeug gemäß einer ersten Ausführungsform der vorliegenden Erfindung.

In Fig. 1 ist eine Bildsensoreinrichtung 10 gezeigt, welche dazu ausgebildet ist, Bilddaten 2 aus der Umgebung des Fahrzeugs aufzunehmen. Das Augmented-Reality-System weist eine Datenspeichereinrichtung 12 mit einem ersten Speicher 13 und einem zweiten Speicher 14 auf, welche mit der Bildsensoreinrichtung 10 verbunden ist und welche derart ausgebildet ist, dass die aufgenommenen Bilddaten 2 durch den ersten Speicher 13 und den zweiten Speicher 14 speicherbar sind.

Eine mit der Sensoreinrichtung 10 und der Datenspeichereinrichtung 12 verbundene Identifizierungseinrichtung 15 ist derart ausgebildet, dass die in den aufgenommenen Bilddaten 2 vorhandene Objekte 4 nach einem vorgegebenen ersten Auswahlkriterium identifizieren kann. Die Identifizierungseinheit 15 kann derart ausgebildet sein, dass die Identifizierung der vorhandenen Objekte 4 auf internen Kartendaten, Videogeländemerkmalen, lokalen Geländemerkmalen, lokalen Sehenswürdigkeiten und/oder Positions- und Navigationsdaten basieren kann. Solche Hilfsdaten zur Erleichterung der Identifizierung der vorhandenen Objekte 4 können aus fahrzeuginternen und/oder fahrzeugexternen Quellen stammen. Fahrzeuginterne Quellen können die Hilfsdaten dem Augmented-Reality-System beispielsweise über ein fahrzeuginternes BUS-System zur Verfügung stellen. Externe Hilfsdaten können beispielsweise über eine Kommunikationseinrichtung empfangen werden. Über eine Benutzerschnittstelle können auch von einem Benutzer zusätzliche Hilfsdaten bereitgestellt werden.

Das erste Auswahlkriterium kann vorprogrammiert sein und/oder von einem Benutzer über eine Benutzerschnittstelle und/oder über eine Kommunikationseinrichtung empfangen werden. Ist der Benutzer beispielsweise auf der Suche nach einer Tankstelle, kann er als ein Unterkriterium des ersten Auswahlkriteriums vorgeben, dass in den aufgenommenen Bilddaten 2 vorhandene Objekte 4, welche Tankstellen entsprechen, identifiziert werden sollen. Ist das Fahrzeug beispielsweise ein Polizei- oder ein sonstiges Einsatzfahrzeug, kann ein Benutzer etwa in einer Einsatzzentrale Unterkriterien des ersten Auswahlkriteriums über die Kommunikationseinrichtung an die Identifizierungseinrichtung 15 übermitteln. Dabei kann es sich beispielsweise um visuelle Eigenschaften einer verdächtigen Person oder eines aufzufindenden Fahrzeugs handeln.

Die Identifizierungseinrichtung 15 ist weiterhin derart ausgebildet, dass nach einem vorgegebenen zweiten Auswahlkriterium, welches Vorgaben an die Bildauflösung der Bilddaten 2 umfasst, bestimmte Bilddaten 2 zu den identifizierten vorhandenen Objekten 4 zum Speichern an den zweiten Speicher 14 übergebbar sind. Gemäß der ersten Ausführungsform ist der zweite Speicher 14 so ausgebildet, dass er von der Identifizierungseinrichtung 15 an dem zweiten Speicher 14 übergebene Bilddaten 2 speichert, solange Speicherplatz im zweiten Speicher 14 verfügbar ist. Geht der Speicherplatz des zweiten Speichers 14 zur Neige, werden sukzessive jeweils die ältesten im zweiten Speicher 14 gespeicherten Bilddaten 2 gelöscht, bis wieder genügend Speicherplatz vorhanden ist, um Bilddaten 2 zu neu identifizierten vorhandenen Objekten 4 aufzunehmen. Der erste Speicher 13 ist derart ausgebildet, dass er die aufgenommenen Bilddaten 2 nur solange speichert, bis die vorhandenen Objekte 4 durch die Identifizierungseinrichtung 15 identifiziert und im zweiten Speicher 14 gespeichert sind.

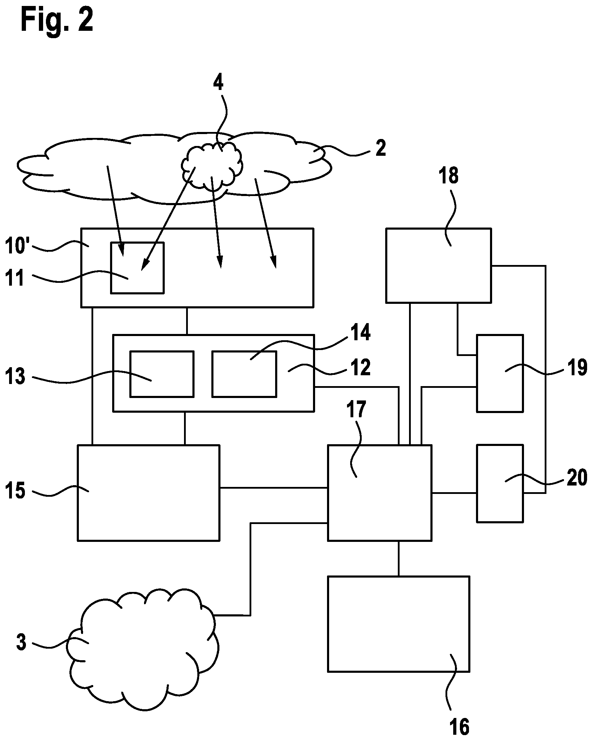

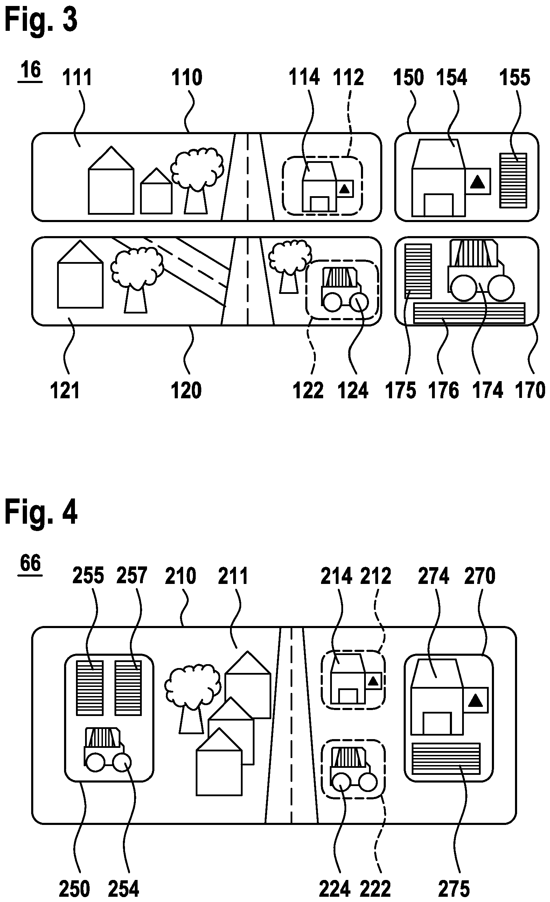

Das Augmented-Reality-System gemäß der ersten Ausführungsform weist weiterhin eine Augmented-Reality-Einrichtung 17 auf, welche mit der Datenspeichereinrichtung 12 verbunden ist. Die Augmented-Reality-Einrichtung 17 ist derart ausgebildet, dass sie durch Kombination der aufgenommenen Bilddaten 2 mit zusätzlichen bereitstellbaren Daten 3 Augmented-Reality-Objektdarstellungen erzeugen kann. Die Augmented-Reality-Objektdarstellungen können auf einer mit der Augmented-Reality-Einrichtung 17 verbundenen Anzeigeeinrichtung 6 angezeigt werden, wie im Folgenden in Bezug auf die Figuren 2 und 3 erläutert.

Mit der Augmented-Reality-Einrichtung 17 ist eine Auswahleinrichtung 18 verbunden. Die Auswahleinrichtung 18 ist derart ausgebildet, dass sie nach einem vorgegebenen dritten Auswahlkriterium einen Teil der in dem zweiten Speicher 14 gespeicherten Bilddaten 2 auswählt. Das dritte Auswahlkriterium kann vorprogrammiert sein und/oder von einem Benutzer über eine Benutzerschnittstelle eingegeben werden und/oder über eine Kommunikationseinrichtung empfangen werden. Das dritte Auswahlkriterium kann beispielsweise das Unterkriterium umfassen, dass zu jedem identifizierten vorhandenen Objekt 4 jeweils Bilddaten 2 mit der besten vorhandenen Bildauflösung ausgewählt werden. Ein Unterkriterium des dritten Auswahlkriteriums kann auch sein, dass etwa bei identifizierten vorhandenen Objekten 4, welche Häuser sind, jeweils Bilddaten 2 ausgewählt werden, welche Frontalansichten entsprechen. Sind gemäß dem ersten Auswahlkriterium beispielsweise Tankstellen als vorhandene Objekte 4 identifiziert worden, kann das dritte Auswahlkriterium das Unterkriterium enthalten, dass aus den im zweiten Speicher 14 gespeicherten Bilddaten 2 solche Bilddaten 2 ausgewählt werden sollen, auf welchen Preisinformationsschilder der jeweiligen Tankstelle deutlich erkennbar sind.

Die zusätzlichen bereitstellbaren Daten 3 können Bilddaten und/oder Textdaten und/oder Audiodaten umfassen, welche aus einer fahrzeuginternen Datenbank und/oder aus mittels einer Kommunikationseinrichtung empfangenen Daten aus einer fahrzeugexternen Datenbank entnommen werden können. Werden beispielsweise gemäß dem ersten Auswahlkriterium bekannte Sehenswürdigkeiten als vorhandene Objekte 4 in den aufgenommenen Bilddaten 2 identifiziert, können zu diesen vorhandenen Objekten 4 gemäß dem zweiten Auswahlkriterium jeweils Bilddaten 2 mit einer bestimmten Mindestbildauflösung im zweiten Speicher 14 gespeichert werden. Die zusätzlichen bereitstellbaren Daten 3 können dann beispielsweise eine Geschichte entsprechender Sehenswürdigkeiten oder auch Öffnungszeiten umfassen.

Die Auswahleinrichtung 18 steuert die Augmented-Reality-Einrichtung 17, dass diese basierend auf dem von der Auswahleinrichtung 18 nach dem vorgegebenen dritten Auswahlkriterium ausgewählten Teil der in dem zweiten Speicher 14 gespeicherten Bilddaten 2 Augmented-Reality-Objektdarstellungen erzeugt. Die Augmented-Reality-Objektdarstellungen können mittels der Anzeigeeinrichtung 6 angezeigt werden.

Fig. 2 zeigt eine schematische Ansicht eines Augmented-Reality-Systems zum Erzeugen von Augmented-Reality-Objektdarstellungen für ein Fahrzeug gemäß einer zweiten Ausführungsform der vorliegenden Erfindung.

Im Vergleich zur in Fig. 1 dargestellten ersten Ausführungsform weist das Augmented-Reality-System gemäß der zweiten Ausführungsform eine Bildsensorsvorrichtung 10' mit einer Rundum-Kamera 11, sowie eine Benutzerschnittstelle 19, eine Kommunikationseinrichtung 20 und eine Anzeigeeinrichtung 16 auf, welche im Folgenden in Bezug auf Fig. 3 erläutert werden.

Mittels der Benutzerschnittstelle 19 und/oder der Kommunikationseinrichtung 20 können, wie oben bereits als Option in Bezug auf die erste Ausführungsform beschrieben, das erste, zweite und dritte Auswahlkriterium vorgegeben, verändert oder auf sonstige Weise beeinflusst werden.

Fig. 3 zeigt eine schematische Ansicht einer Anzeigeeinrichtung gemäß der zweiten Ausführungsform der vorliegenden Erfindung.

Die Anzeigeeinrichtung 16 in Fig. 3 weist zwei Hauptanzeigebereiche 110, 120 und zwei Nebenanzeigebereiche 150, 170 auf. Gemäß der zweiten Ausführungsform enthält die Bildsensoreinrichtung 10' die Rundum-Kamera 11, welche derart ausgebildet ist, dass sie mindestens Bilddaten 2 gemäß einer im Wesentlichen 180°-Sicht 111, zentriert um die Fahrtrichtung des Fahrzeugs, sowie Bilddaten 2 gemäß einer im Wesentlichen 180°-Sicht 121, zentriert um die der Fahrtrichtung entgegengesetzt liegende Richtung, der Umgebung des Fahrzeugs aufnehmen kann. Der erste Hauptanzeigebereich 110 zeigt dabei die im Wesentlichen 180°-Sicht 111, zentriert um die Fahrtrichtung des Fahrzeugs, an und der zweite Hauptanzeigebereich 120 zeigt die im Wesentlichen 180°-Sicht 121, zentriert um die der Fahrtrichtung entgegengesetzt liegende Richtung der Umgebung des Fahrzeugs an. Gemäß der ersten Ausführungsform sind die Hauptanzeigebereiche 110, 120 direkt mit der Rundum-Kamera 11 verbunden und zeigen die von der Rundum-Kamera 11 aufgenommenen Bilddaten 2 im Wesentlichen gleichzeitig mit der Aufnahme an.

Die Hauptanzeigebereiche 110, 120 können im Fahrzeug beispielsweise so angeordnet sein, dass ein Fahrzeugführer sie während der Fahrt betrachten kann, etwa um seine Wahrnehmung des Verkehrsflusses zu verbessern.

In dem in Fig. 3 dargestellten Beispiel wurden durch die Identifizierungseinrichtung 15 ein erstes vorhandenes Objekt 114 und ein zweites vorhandenes Objekt 124 in den Bilddaten 2 identifiziert. Die Identifizierungseinrichtung 15 ist so ausgebildet, dass sie die Augmented-Reality-Einrichtung 17 steuert, die identifizierten vorhandenen Objekte 114, 124 in den Hauptanzeigebereichen 110, 120 durch Markierungen 112, 122 kenntlich zu machen. Ein Benutzer, welcher die Hauptanzeigebereiche beobachtet, ist somit informiert, dass neue vorhandene Objekte 114, 124 identifiziert wurden und Bilddaten 2 zu diesen Objekten zur Verfügung stehen. Die Markierungen 112, 122 können als von der Augmented-Reality-Einrichtung 17 erzeugte Augmented-Reality-Objekte, beispielsweise basierend auf Logos von Geschäften oder Handelsketten etc. ausgebildet sein.

Gemäß dem vorgegebenen dritten Auswahlkriterium ist die Augmented-Reality-Einrichtung 17 gesteuert, das identifizierte vorhandene Objekt 114 auf dem ersten Nebenanzeigebereich 150 anzuzeigen. Das heißt, dass Bilddaten 2 zu dem identifizierten vorhandenen Objekt 114 auf dem ersten Nebenanzeigebereich 150 als Augmented-Reality-Objektdarstellung 154 sichtbar sind. Die Augmented-Reality-Objektdarstellung 154 umfasst dabei Bilddaten 2 zu dem identifizierten vorhandenen Objekt 114, sowie die zusätzlichen bereitgestellten Daten 155. Im in Fig. 2 dargestellten Beispiel enthalten die zusätzlichen bereitgestellten Daten 155 Textdaten mit Informationen zu dem identifizierten vorhandenen Objekt 114. Gemäß dem vorgegebenen dritten Auswahlkriterium ist die Augmented-Reality-Einrichtung 17 gesteuert, mittels des zweiten Nebenanzeigebereichs 170 Augmented-Reality-Objektdarstellungen 174, basierend auf dem identifizierten vorhandenen Objekt 124 anzuzeigen. Die Augmented-Reality-Objektdarstellung 174 beinhaltet außer Bilddaten 2 zu dem identifizierten vorhandenen Objekt 124 auch zusätzliche Textdaten 175, 176.

Durch Bedienen der Benutzerschnittstelle 19 kann ein Benutzer eine Vergrößerungsstufe für die Augmented-Reality-Objektdarstellungen 154, 174, gemeinsam oder separat, zur Anzeige auswählen. Ein Benutzer kann durch Bedienen der Benutzerschnittstelle 19 eine Augmented-Reality-Effektdarstellung 154, 174 mittels der Anzeigeeinrichtung 16 aus einer Mehrzahl von Richtungen anzeigen lassen. Beispielsweise kann es der Fall sein, dass zu dem in der rückwärtigen Ansicht 121 sichtbaren identifizierten vorhandenen Objekt 124 Bilddaten 2 im zweiten Speicher 14 gespeichert sind, welche aufgenommen wurden, als sich das Fahrzeug noch auf das identifizierte vorhandene Objekt 124 zubewegte. Ein Benutzer kann durch Bedienen der Benutzerschnittstelle 19 auswählen, dass er das identifizierte vorhandene Objekt 124, aus mindestens zwei Perspektiven sehen möchte. Ist das Fahrzeug mit dem Augmented-Reality-System an dem identifizierten vorhandenen Objekt 124 vorbeigefahren, können genügend Bilddaten 2 vorhanden sein, so dass der Benutzer sich mittels des Nebenanzeigebereichs 170 eine 3D-Rekonstruktion des identifizierten vorhandenen Objekt 124 als Augmented-Reality-Objektdarstellung 174 anzeigen lassen kann. Die mittels der Benutzerschnittstelle 19 durchgeführten Einwirkungen auf das Augmented-Reality-System können ebenso von einem autorisierten fahrzeugexternen Benutzer mittels der Kommunikationseinrichtung 20 durchgeführt werden. Das Bedienen der Benutzerschnittstelle 19 kann beispielsweise über Touch-Signale erfolgen.

Fig. 4 zeigt eine schematische Ansicht einer Anzeigeeinrichtung gemäß einer dritten Ausführungsform der vorliegenden Erfindung.

Die Anzeigeeinrichtung 66 in Fig. 4 kann die Anzeigeeinrichtung 16 der zweiten Ausführungsform ersetzen. Die Anzeigeeinrichtung 66 weist einen Hauptanzeigebereich 210 und zwei Nebenanzeigebereiche 250, 270 auf. Die Nebenanzeigebereiche 250, 270 sind in dem Hauptanzeigebereich 210 integriert. Von der Identifizierungseinrichtung 15 identifizierte vorhandene Objekte 214, 224 werden im Hauptanzeigebereich 210 durch Markierungen 212, 222 kenntlich gemacht. Die Markierungen 212, 222 können wie die in Bezug auf Fig. 3 beschriebenen Markierung 112, 122 ausgebildet sein. Basierend auf dem identifizierten vorhandenen Objekt 214 ist im Nebenanzeigebereich 270 eine Augmented-Reality-Objektdarstellung 274 mit zusätzlichen bereitgestellten Daten 275 angezeigt. Der Nebenanzeigebereich 250 zeigt eine Augmented-Reality-Objektdarstellung 254, welche auf dem identifizierten vorhandenen Objekt 224 basiert und zusätzliche bereitgestellte Daten 255, 257 umfasst.

Im in Fig. 4 dargestellten Beispiel zeigt der Hauptanzeigebereich 210 eine im Wesentlichen 180°-Sicht 211, zentriert um die Fahrtrichtung des Fahrzeugs. Über die Benutzerschnittstelle 19 kann der Benutzer auswählen, dass stattdessen eine im Wesentlichen 180°-Sicht, zentriert um die der Fahrtrichtung entgegengesetzt liegende Richtung der Umgebung des Fahrzeugs mittels des Hauptanzeigebereichs 210 angezeigt wird. Alternativ kann es dem Benutzer auch möglich sein, eine im Wesentlichen 180°-Sicht um eine beliebige andere Achse, ausgehend vom Fahrzeug, mittels des Hauptanzeigebereichs 210 anzeigen zu lassen. Der Benutzer kann die Achse, entlang welcher die im Wesentlichen 180°-Sicht der Umgebung des Fahrzeugs zentriert wird, auch schwenken können. Der Benutzer kann auch mittels des Hauptanzeigebereichs 210 Augmented-Reality-Objektdarstellungen 254, 274 anzeigen lassen.

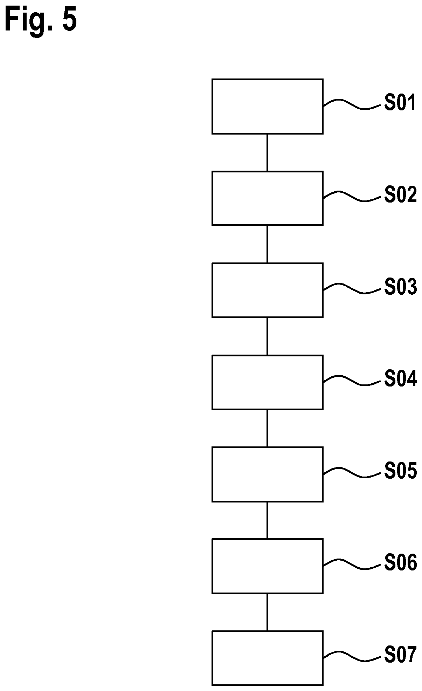

Fig. 5 zeigt ein Flussdiagramm zur Veranschaulichung eines Verfahrens gemäß der vorliegenden Erfindung.

In einem Verfahrensschritt S01 werden Bilddaten 2 aus der Umgebung des Fahrzeugs aufgenommen. In einem Verfahrensschritt S02 werden die aufgenommenen Bilddaten 2 in dem ersten Speicher 13 gespeichert. In einem Verfahrensschritt S03 werden vorhandene Objekte 4; 114, 124; 214, 224 in den aufgenommenen Bilddaten 2 nach dem vorgegebenen ersten Auswahlkriterium identifiziert. In einem Verfahrensschritt S04 werden in den in dem ersten Speicher 13 gespeicherten Bilddaten 2 solche Bilddaten 2 bestimmt, welche einem vorgegebenen zweiten Auswahlkriterium, welches Vorgaben an die Bildauflösung der Bilddaten 2 umfasst, genügen. In einem Verfahrensschritt S05 werden die im Verfahrensschritt S04 bestimmten Bilddaten 2 in einem zweiten Speicher 14 gespeichert. In einem Verfahrensschritt S06 wird ein Teil der im zweiten Speicher 14 gespeicherten Bilddaten 2 nach einem vorgegebenen dritten Auswahlkriterium ausgewählt. In einem Verfahrensschritt S07 werden basierend auf dem ausgewählten Teil der Bilddaten 2 Augmented-Reality-Objektdarstellungen 154, 174; 254, 274 erzeugt. In einem Verfahrensschritt S08 werden die erzeugten Augmented-Reality-Objektdarstellungen 154, 174; 254, 274 mittels einer Anzeigeeinrichtung 6; 16; 66 angezeigt.

Obwohl die vorliegende Erfindung anhand bevorzugter Ausführungsbeispiele vorstehend beschrieben wurde, ist sie darauf nicht beschränkt, sondern auf vielfältige Art und Weise modifizierbar. Insbesondere lässt sich die Erfindung in mannigfaltiger Weise verändern oder modifizieren, ohne vom Kern der Erfindung abzuweichen.

## Patentansprüche

1. Augmented-Reality-System zum Erzeugen und Anzeigen von Augmented-Reality-Objektdarstellungen für ein Fahrzeug mit:
einer Bildsensoreinrichtung (10; 10'), welche dazu ausgebildet ist, Bilddaten (2) aus der Umgebung des Fahrzeugs aufzunehmen;
einer Datenspeichereinrichtung (12) mit einem ersten Speicher (13) und einem zweiten Speicher (14), welche mit der Bildsensoreinrichtung (10; 10') verbunden ist und welche derart ausgebildet ist, dass die aufgenommenen Bilddaten (2) durch den ersten Speicher (13) und den zweiten Speicher (14) speicherbar sind;
einer Identifizierungseinrichtung (15), welche mit der Bildsensoreinrichtung (10; 10') und mit der Datenspeichereinrichtung (12) verbunden und derart ausgebildet ist, dass sie in den aufgenommenen Bilddaten (2) vorhandene Objekte (4; 114, 124; 214, 224) nach einem vorgegebenen ersten Auswahlkriterium identifizieren kann und
weiterhin derart ausgebildet ist, dass mittels der Identifizierungseinrichtung (15) nach einem vorgegebenen zweiten Auswahlkriterium, welches Vorgaben an die Bildauflösung der Bilddaten (2) umfasst, bestimmte Bilddaten (2) zu den identifizierten vorhandenen Objekten (4; 114, 124; 214, 224) zum Speichern an den zweiten Speicher (14) übergebbar sind;
einer Augmented-Reality-Einrichtung (17), welche mit der Datenspeichereinrichtung (12) verbunden und derart ausgebildet ist, dass sie durch Kombination der aufgenommenen Bilddaten (2) mit zusätzlichen bereitstellbaren Daten (3; 154, 155, 175, 176; 255, 257, 275)Augmented-Reality-Objektdarstellungen (112, 122, 154, 174; 212, 222, 254, 274) erzeugen kann; und
einer Auswahleinrichtung (18), welche mit der Augmented-Reality-Einrichtung (17) verbunden und derart ausgebildet ist, dass durch sie die Augmented-Reality-Einrichtung (17) steuerbar ist, basierend auf einem von der Auswahleinrichtung (18) nach einem vorgegebenen dritten Auswahlkriterium ausgewählten Teil der in dem zweiten Speicher (14) gespeicherten Bilddaten (2), Augmented-Reality-Objektdarstellungen (112, 122, 154, 174; 212, 222, 254, 274) zur Anzeige mittels einer mit der Augmented-Reality-Einrichtung (17) verbundenen Anzeigeeinrichtung (6; 16; 66) zu erzeugen.

2. Augmented-Reality-System nach Anspruch 1, wobei der zweite Speicher (14) derart ausgebildet ist, dass er die von der Identifizierungseinrichtung (15) an den zweiten Speicher (14) übergebenen Bilddaten (2) im Wesentlichen so lange speichert, wie Speicherplatz im zweiten Speicher (14) verfügbar ist und/oder wobei der erste Speicher (13) derart ausgebildet ist, dass er die aufgenommenen Bilddaten (2) nur so lange speichert, bis die in den aufgenommenen Bilddaten (2) jeweils vorhandenen Objekte (4; 114, 124; 214, 224) durch die Identifizierungseinrichtung (15) identifiziert und die zu speichernden Bilddaten (2) zu den identifizierten vorhandenen Objekten (4; 114, 124; 214, 224) in dem zweiten Speicher (14) gespeichert sind .

3. Augmented-Reality-System nach einem der vorherigen Ansprüche, wobei das erste, das zweite und das dritte Auswahlkriterium jeweils vorprogrammiert sein und/oder von einem Benutzer über eine Benutzerschnittstelle (19) eingegeben werden und/oder über eine Kommunikationseinrichtung (20) empfangen werden können.

4. Augmented-Reality-System nach einem der vorherigen Ansprüche, wobei die Identifizierungseinrichtung (15) derart ausgebildet ist, dass die Identifizierung der vorhandenen Objekte (4; 114, 124; 214, 224) auf internen Kartendaten, Videogeländemerkmalen, lokalen Geländemerkmalen, lokalen Sehenswürdigkeiten und/oder Positions- und Navigationsdaten basieren kann.

5. Augmented-Reality-System nach einem der vorherigen Ansprüche, wobei die zusätzlichen bereitstellbaren Daten (3; 154, 155, 175, 176; 255, 257, 275) Bilddaten und/oder Textdaten und/oder Audiodaten umfassen, welche aus einer fahrzeuginternen Datenbank und/oder aus mittels einer Kommunikationseinrichtung (20) empfangenen Daten aus einer fahrzeugexternen Datenbank entnommen werden können.

6. Augmented-Reality-System nach einem der vorherigen Ansprüche, wobei die Bildsensoreinrichtung (10') eine Rundum-Kamera (11) aufweist, welche derart ausgebildet ist, dass sie Bilddaten (2) gemäß einer im Wesentlichen 180°-Sicht (111; 211), zentriert um die Fahrtrichtung des Fahrzeugs, sowie Bilddaten (2) gemäß einer im Wesentlichen 180°-Sicht (121), zentriert um die der Fahrtrichtung entgegengesetzt liegende Richtung, der Umgebung des Fahrzeugs aufnehmen kann.

7. Augmented-Reality-System nach einem der vorherigen Ansprüche, wobei die Anzeigeeinrichtung (6; 16; 66) derart ausgebildet ist, dass sie im Wesentlichen ohne Zeitverzögerung zumindest Teile der mittels der Bildsensoreinrichtung (10; 10') aufgenommenen Bilddaten (2) kontinuierlich darstellen kann.

8. Augmented-Reality-System nach einem der vorherigen Ansprüche, wobei die Anzeigeeinrichtung (6; 6') mindestens einen Hauptanzeigebereich (110, 120; 220) aufweist, welcher eine im Wesentlichen 180°-Sicht (111, 121; 211), zentriert um die Fahrtrichtung des Fahrzeugs (111; 211) oder zentriert um die der Fahrtrichtung entgegengesetzt liegende Richtung (121), der Umgebung des Fahrzeugs anzeigt.

9. Augmented-Reality-System nach einem der vorherigen Ansprüche, wobei die Anzeigeeinrichtung (6; 6') mindestens einen Nebenanzeigebereich (150, 170; 250, 270) aufweist, welcher sich ganz oder teilweise innerhalb eines Hauptanzeigebereichs (110, 120; 220) befinden kann, und welcher durch Kombination des ausgewählten Teils der in dem zweiten Speicher (14) gespeicherten Bilddaten (2) mit den zusätzlich bereitstellbaren Daten (3; 154, 155, 175, 176; 255, 257, 275) erzeugte Augmented-Reality-Objektdarstellungen (112, 122, 154, 174; 212, 222, 254, 274) anzeigt.

10. Augmented-Reality-System nach einem der vorherigen Ansprüche, wobei ein Benutzer durch Bedienen einer Benutzerschnittstelle (20) eine Vergrößerungsstufe einer Augmented-Reality-Objektdarstellung (112, 122, 154, 174; 212, 222, 254, 274), welche mittels der Anzeigeeinrichtung (6; 16; 66) angezeigt wird, auswählen kann.

11. Augmented-Reality-System nach einem der vorherigen Ansprüche, wobei ein Benutzer durch Bedienen einer Benutzerschnittstelle (20) eine Augmented-Reality-Objektdarstellung (112, 122, 154, 174; 212, 222, 254, 274) mittels der Anzeigeeinrichtung (6; 16; 66) aus einer Mehrzahl von Richtungen anzeigen lassen kann.

12. Verfahren zum Erzeugen und Anzeigen von Augmented-Reality-Objektdarstellungen für ein Fahrzeug mit den Schritten:
• Aufnehmen (S01) von Bilddaten (2) aus der Umgebung des Fahrzeugs;
• Speichern (S02) der aufgenommenen (S01) Bilddaten (2) in einem ersten Speicher (13);
• Identifizieren (S03) von vorhandenen Objekten (4; 114, 124; 214, 224) in den aufgenommenen Bilddaten (2) nach einem vorgegebenen ersten Auswahlkriterium;
• Bestimmen (S04) von in dem ersten Speicher (13) gespeicherten Bilddaten (2) zu den identifizierten (S03) vorhandenen Objekten (4; 114, 124; 214, 224) nach einem zweiten Auswahlkriterium, welches Vorgaben an die Bildauflösung der Bilddaten (2) umfasst;
• Speichern (S05) der bestimmten (S04) Bilddaten (2) umfasst, bestimmte Bilddaten (2) zu den identifizierten (S03) vorhandenen Objekten (4; 114, 124; 214, 224) in einem zweiten Speicher (14);
• Auswählen (S06) eines Teils der im zweiten Speicher (14) gespeicherten (S05) Bilddaten (2) nach einem vorgegebenen dritten Auswahlkriterium;
• Erzeugen (S07) von Augmented-Reality-Objektdarstellungen (112, 122, 154, 174; 212, 222, 254, 274) basierend auf dem ausgewählten (S06) Teil der Bilddaten (2);
• Anzeigen (S08) der erzeugten (S07) Augmented-Reality-Objektdarstellungen (112, 122, 154, 174; 212, 222, 254, 274) mittels einer Anzeigeeinrichtung (6;16; 66).

## Claims

1. Augmented reality system for generating and displaying augmented reality object representations for a vehicle, having:
an image sensor device (10; 10') designed to record image data (2) from the surroundings of the vehicle;
a data memory device (12) having a first memory (13) and a second memory (14), which data memory device is connected to the image sensor device (10; 10') and is designed such that the recorded image data (2) are storable by the first memory (13) and the second memory (14) ;
an identification device (15), which is connected to the image sensor device (10; 10') and to the data memory device (12) and designed such that it can identify objects (4; 114, 124; 214, 224) present in the recorded image data (2) according to a prescribed first selection criterion and
is furthermore designed such that image data (2) pertaining to the identified objects (4; 114, 124; 214, 224) that are present, which image data are determined according to a prescribed second selection criterion, which comprises presents for the image resolution of the image data (2), are transferable by means of the identification device (15) to the second memory (14) for storage;
an augmented reality device (17), which is connected to the data memory device (12) and designed such that it can generate augmented reality object representations (112, 122, 154, 174; 212, 222, 254, 274) by combining the recorded image data (2) with additional providable data (3; 154, 155, 175, 176; 255, 257, 275); and
a selection device (18), which is connected to the augmented reality device (17) and designed such that the augmented reality device (17) is controllable by it to take a portion of the image data (2) stored in the second memory (14), which portion is selected by the selection device (18) according to a prescribed third selection criterion, as a basis for generating augmented reality object representations (112, 122, 154, 174; 212, 222, 254, 274) for display by means of a display device (6; 16; 66) connected to the augmented reality device (17).

2. Augmented reality system according to Claim 1, wherein the second memory (14) is designed such that it stores the image data (2) transferred from the identification device (15) to the second memory (14) substantially for as long as memory space is available in the second memory (14) and/or wherein the first memory (13) is designed such that it stores the recorded image data (2) only until the objects (4; 114, 124; 214, 224) present in each of the recorded image data (2) are identified by the identification device (15) and the image data (2) to be stored pertaining to the identified objects (4; 114, 124; 214, 224) that are present are stored in the second memory (14).

3. Augmented reality system according to either of the preceding claims, wherein the first, the second and the third selection criterion can each be pre-programmed and/or input by a user via a user interface (19) and/or received via a communication device (20).

4. Augmented reality system according to one of the preceding claims, wherein the identification device (15) is designed such that the identification of the objects (4; 114, 124; 214, 224) that are present can be based on internal map data, video terrain features, local terrain features, local attractions and/or position and navigation data.

5. Augmented reality system according to one of the preceding claims, wherein the additional providable data (3; 154, 155, 175, 176; 255, 257, 275) comprise image data and/or text data and/or audio data that can be taken from a vehicle-internal database and/or from data from a vehicle-external database that are received by means of a communication device (20).

6. Augmented reality system according to one of the preceding claims, wherein the image sensor device (10') has an omnidirectional camera (11) designed such that it can record image data (2) in accordance with a substantially 180° view (111; 211), centred around the direction of travel of the vehicle, an image data (2) in accordance with a substantially 180° view (121), centred around the direction opposite to the direction of travel, of the surroundings of the vehicle.

7. Augmented reality system according to one of the preceding claims, wherein the display device (6; 16; 66) is designed such that it can continuously present at least portions of the image data (2) recorded by means of the image sensor device (10; 10') substantially without a time delay.

8. Augmented reality system according to one of the preceding claims, wherein the display device (6; 6') has at least one main display area (110, 120; 220) that displays a substantially 180° view (111, 121; 211), centred around the direction of travel of the vehicle (111; 211) or centred around the direction (121) opposite to the direction of travel, of the surroundings of the vehicle.

9. Augmented reality system according to one of the preceding claims, wherein the display device (6; 6') has at least one secondary display area (150, 170; 250, 270), all or some of which can be situated within a main display area (110, 120; 220), and which displays augmented reality object representations (112, 122, 154, 174; 212, 222, 254, 274) generated by combining the selected portion of the image data (2) stored in the second memory (14) with the additionally providable data (3; 154, 155, 175, 176; 255, 257, 275).

10. Augmented reality system according to one of the preceding claims, wherein a user can use a user interface (20) to select a magnification level for an augmented reality object representation (112, 122, 154, 174; 212, 222, 254, 274) displayed by means of the display device (6; 16; 66).

11. Augmented reality system according to one of the preceding claims, wherein a user can use a user interface (20) to display an augmented reality object representation (112, 122, 154, 174; 212, 222, 254, 274) by means of the display device (6; 16; 66) from a plurality of directions.

12. Method for generating and displaying augmented reality object representations for a vehicle, having the steps of:
• recording (S01) image data (2) from the surroundings of the vehicle;
• storing (S02) the recorded (S01) image data (2) in a first memory (13);
• identifying (S03) objects (4; 114, 124; 214, 224) that are present in the recorded image data (2) according to a prescribed first selection criterion;
• determining (S04) image data (2) pertaining to the identified (S03) objects (4; 114, 124; 214, 224) that are present, which image data are stored in the first memory (13), according to a second selection criterion, which comprises presets for the image resolution of the image data (2);
• storing (S05) the determined (S04) image data (2) comprises, determined image data (2) pertaining to the identified (S03) objects (4; 114, 124; 214, 224) that are present in a second memory (14);
• selecting (S06) a portion of the image data (2) stored (S05) in the second memory (14) according to a prescribed third selection criterion;
• generating (S07) augmented reality object representations (112, 122, 154, 174; 212, 222, 254, 274) on the basis of the selected (S06) portion of the image data (2);
• displaying (S08) the generated (S07) augmented reality object representations (112, 122, 154, 174; 212, 222, 254, 274) by means of a display device (6; 16; 66).

## Revendications

1. Système à réalité augmentée de production et d'affichage de représentations d'objets à réalité augmentée pour un véhicule, comprend :
un dispositif capteur d'image (10 ; 10') conçu pour acquérir des données d'images (2) provenant de l'environnement du véhicule ;
un dispositif de stockage de données (12) comportant une première mémoire (13) et une deuxième mémoire (14), lequel est relié au dispositif capteur d'image (10 ; 10') et est conçu de manière à ce que les données image (2) acquises puissent être stockées dans la première mémoire (13) et la deuxième mémoire (14) ;
un dispositif d'identification (15) qui est relié au dispositif capteur d'image (10 ; 10') et au dispositif de stockage de données (12) et est conçu de manière à ce qu'il puisse identifier des objets (4 ; 114, 124 ; 214, 224) présents dans les données d'images (2) acquises selon un premier critère de sélection prédéterminé et est en outre conçu de manière à ce que des données d'images (2) déterminées concernant les objets identifiés (4 ; 114, 124 ; 214, 224) présents puissent être transférées au moyen du dispositif d'identification (15) dans la deuxième mémoire (14), à des fins de stockage, selon un deuxième critère de sélection prédéterminé, lequel comprend des spécifications concernant la résolution d'image des données d'images (2) ;
un dispositif à réalité augmentée (17) qui est relié au dispositif de stockage de données (12) et est conçu de manière à ce qu'il puisse produire des représentations d'objets à réalité augmentée (112, 122, 154, 174 ; 212, 222, 254, 274) en combinant les données d'images (2) acquises avec des données supplémentaires (3 ; 154, 155, 175, 176 ; 255, 257, 275) pouvant être fournies ; et
un dispositif de sélection (18) qui est relié au dispositif à réalité augmentée (17) et est conçu de manière à ce que le dispositif à réalité augmentée (17) puisse être commandé par celui-ci pour produire, sur la base d'une partie, sélectionnée par le dispositif de sélection (18) selon un troisième critère prédéterminé, des données d'images (2) stockées dans la deuxième mémoire (14), des représentations d'objets à réalité augmentée (112, 122, 154, 174 ; 212, 222, 254, 274) à des fins d'affichage au moyen d'un dispositif d'affichage (6 ; 16 ; 66) relié au dispositif à réalité augmentée (17).

2. Système à réalité augmentée selon la revendication 1, dans lequel la deuxième mémoire (14) est conçue de manière à ce qu'elle stocke les données d'images (2) transférées du dispositif d'identification (15) à la deuxième mémoire (14) sensiblement aussi longtemps que de l'espace mémoire est disponible dans la deuxième mémoire (14) et/ou dans lequel la première mémoire (13) est conçue de manière à ce qu'elle stocke les données d'images (2) acquises uniquement jusqu'à ce que les objets (4 ; 114, 124 ; 214, 224) respectivement présents dans les données d'images (2) acquises soient identifiés par le dispositif d'identification (15) et que les données d'images (2) à stocker concernant les objets (4 ; 114, 124 ; 214, 224) présents identifiés soient stockées dans la deuxième mémoire (14).

3. Système à réalité augmentée selon l'une des revendications précédentes, dans lequel les premier, deuxième et troisième critères de sélection peuvent respectivement être préprogrammés et/ou saisis par un utilisateur par l'intermédiaire d'une interface utilisateur (19) et/ou reçus par l'intermédiaire d'un dispositif de communication (20).

4. Système à réalité augmentée selon l'une des revendications précédentes, dans lequel le dispositif d'identification (15) est conçu de manière à ce que l'identification des objets (4 ; 114, 124 ; 214, 224) présents puisse être basée sur des données cartographiques internes, des traits caractéristiques vidéo du terrain, des traits caractéristiques locaux du terrain, des sites touristiques locaux et/ou des données de position et de navigation.

5. Système à réalité augmentée selon l'une des revendications précédentes, dans lequel les données supplémentaires (3 ; 154, 155, 175, 176 ; 255, 257, 275) pouvant être fournies comprennent des données d'images et/ou des données de texte et/ou des données audio qui peuvent être extraites d'une base de données interne au véhicule et/ou de données reçues au moyen d'un dispositif de communication (20) depuis une base de données externe au véhicule.

6. Système à réalité augmentée selon l'une des revendications précédentes, dans lequel le moyen de capteur d'image (10') comprend une caméra périphérique (11) conçue pour recevoir des données d'images (2), selon une vue à sensiblement 180° (111 ; 211) centrée autour de la direction de déplacement du véhicule, et des données d'images (2), selon une vue à sensiblement 180° (121) centrée autour de la direction opposée à la direction de déplacement, de l'environnement du véhicule.

7. Système à réalité augmentée selon l'une des revendications précédentes, dans lequel le dispositif d'affichage (6 ; 16 ; 66) est conçu de manière à ce qu'il puisse afficher en continu, sensiblement sans temps de retard, au moins certaines parties des données d'images (2) acquises au moyen du dispositif capteur (10 ; 10').

8. Système à réalité augmentée selon l'une des revendications précédentes, dans lequel le dispositif d'affichage (6 ; 6') comporte au moins une zone d'affichage principale (110, 120 ; 220) qui affiche une vue à sensiblement 180° (111, 121 ; 211) de l'environnement du véhicule, centrée autour de la direction de déplacement du véhicule (111 ; 211) ou centrée autour de la direction (121) opposée à la direction de déplacement.

9. Système à réalité augmentée selon l'une des revendications précédentes, dans lequel le dispositif d'affichage (6 ; 6') comporte au moins une zone d'affichage secondaire (150, 170 ; 250, 270) qui peut être située entièrement ou partiellement à l'intérieur d'une zone d'affichage principale (110, 120 ; 220), et qui affiche des représentations d'objets à réalité augmentée (112, 122, 154, 174 ; 212, 222, 254, 274) produites en combinant la partie sélectionnée des données d'images (2) stockées dans la deuxième mémoire (14) avec les données supplémentaires (3 ; 154, 155, 175, 176 ; 255, 257, 275) pouvant être fournies.

10. Système à réalité augmentée selon l'une des revendications précédentes, dans lequel un utilisateur peut, par manipulation d'une interface utilisateur (20), sélectionner un niveau de grossissement d'une représentation d'objet à réalité augmentée (112, 122, 154, 174 ; 212, 222, 254, 274) qui est affichée par le dispositif d'affichage (6 ; 16 ; 66).

11. Système à réalité augmentée selon l'une des revendications précédentes, dans lequel un utilisateur peut, par manipulation d'une interface utilisateur (20), faire en sorte d'afficher une représentation d'objet à réalité augmentée (112, 122, 154, 174 ; 212, 222, 254, 274) suivant une pluralité de directions au moyen du dispositif d'affichage (6 ; 16 ; 66).

12. Procédé de production et d'affichage de représentations d'objets à réalité augmentée pour un véhicule, comprenant les étapes suivantes :
• l'acquisition (S01) de données d'images (2) provenant de l'environnement du véhicule ;
• le stockage (S02) des données d'images (2) acquises (S01) dans une première mémoire (13) ;
• l'identification (S03) d'objets (4 ; 114, 124 ; 214, 224) présents dans les données d'images (2) acquises selon un premier critère de sélection prédéterminé ;
• la détermination (S04) de données d'images (2) stockées dans la première mémoire (13) concernant les objets (4 ; 114, 124 ; 214, 224) présents identifiés (S03) selon un deuxième critère de sélection, lequel comprend des spécifications concernant la résolution d'image des données d'images (2) ;
• le stockage (S05) des données d'images (2) déterminées (S04) comprend, des données d'images (2) déterminées concernant les objets (4 ; 114, 124 ; 214, 224) présents identifiés (S03) dans une deuxième mémoire (14) ;
• la sélection (S06) d'une partie des données d'images (2) stockées (S05) dans la deuxième mémoire (14) selon un troisième critère de sélection prédéterminé ;
• la production (S07) de représentations d'objets à réalité augmentée (112, 122, 154, 174 ; 212, 222, 254, 274) sur la base de la partie sélectionnée (S06) des données d'images (2) ;
• l'affichage (S08) des représentations d'objets à réalité augmentée (112, 122, 154, 174 ; 212, 222, 254, 274) produites (S07) au moyen d'un dispositif d'affichage (6 ; 16 ; 66).
